(19) **Europäisches Patentamt / European Patent Office / Office européen des brevets**

(11) **EP 4 685 005 A1**

(12) **EUROPEAN PATENT APPLICATION**
published in accordance with Art. 153(4) EPC

(43) Date of publication:
28.01.2026 Bulletin 2026/05

(21) Application number: 24774662.1

(22) Date of filing: 05.03.2024

(51) International Patent Classification (IPC):
*B60L 50/53* (2019.01)     *H02J 7/00* (2026.01)
*H02J 7/04* (2006.01)

(52) Cooperative Patent Classification (CPC):
B60L 50/53; H02J 7/00; H02J 7/04; Y02T 10/70

(86) International application number:
PCT/JP2024/008292

(87) International publication number:
WO 2024/195519 (26.09.2024 Gazette 2024/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2023 JP 2023044953

(71) Applicant: Hitachi Construction Machinery Co.,
Ltd.
Tokyo 110-0015 (JP)

(72) Inventors:
• KANAI Masaki
Tokyo 100-8280 (JP)
• SAITO Shinjiro
Tsuchiura-shi, Ibaraki 300-0013 (JP)
• HAMADA Tomoyuki
Tsuchiura-shi, Ibaraki 300-0013 (JP)

(74) Representative: MERH-IP Matias Erny Reichl
Hoffmann
Patentanwälte PartG mbB
Paul-Heyse-Straße 29
80336 München (DE)

(54) **VEHICLE CONTROL DEVICE AND VEHICLE MANAGEMENT SYSTEM**

(57)     The disclosure provides a vehicle control device capable of avoiding running out of power in a work vehicle in the whole of a planned route on which the work vehicle travels and suppressing reduction in work efficiency. The vehicle control device 110 includes a zone information acquiring section 111 and a travel control section 112. The zone information acquiring section 111 acquires zone information that is information on a zone included in a planned route of the work vehicle. The zone information includes information on one or more charging zones in which a power feeding device 40 is installed and the work vehicle travels while an electrical storage device 17 is charged and information on one or more non-charging zones in which the power feeding device 40 is not installed and the work vehicle travels while the power of the electrical storage device 17 is supplied to a travel device 18 to consume the power of the electrical storage device 17. The travel control section 112 controls the travel device 18 such that a charged power amount of the electrical storage device 17 at an ending point of each of the charging zones becomes larger than a power consumption amount of the travel device 18 in the non-charging zone having the ending point as a starting point.

Fig. 3

## Description

Technical Field

The present disclosure relates a vehicle control device and a vehicle management system.

Background Art

Conventionally, there has been known an invention relating to a control device for an electric vehicle (see Patent Literature 1 below). In the conventional control device for an electric vehicle, the electric vehicle is configured to store supplied power in a storage battery while traveling on a power feeding lane that is a lane capable of performing contactless power supply. The conventional control device for an electric vehicle includes a target setting unit that preliminarily sets a target exit power storage amount that is a target value of a power storage amount of the storage battery at a time point at which the electric vehicle arrives at an exit of the power feeding lane, and a vehicle speed control unit that controls a vehicle speed of the electric vehicle. The vehicle speed control unit controls the vehicle speed such that the power storage amount at the time point at which the electric vehicle arrives at the exit of the power feeding lane becomes the target exit power storage amount (Patent Literature 1, paragraph 0008, Claim 1, Abstract, Fig. 4).

In the control device, the vehicle speed of the electric vehicle traveling on the power feeding lane is controlled by a vehicle speed unit such that the power storage amount at the time point at which the electric vehicle arrives at the exit of the power feeding lane, that is, the power storage amount at a time point of completion of contactless power supply matches the target exit power storage amount preliminarily set by the target setting unit. As the target exit power storage amount, for example, a power storage amount that enables traveling to a next charging location (power feeding lane, plug-in station, and the like) and a power storage amount with which an electrical storage device becomes full charge are set. The control as described above allows appropriately charging the electric vehicle (Patent Literature 1, paragraph 0009).

Citation List

Patent Literature

Patent Literature 1: JP 2019-068500 A

Summary of Invention

Technical Problem

The conventional control device for an electric vehicle allows the electric vehicle to travel to the next charging location. However, when the control device for an electric vehicle is applied to, for example, a work vehicle that repeatedly performs a sequence of works, such as loading, transporting, and unloading, at a work site such as a mine and a construction site, the work vehicle possibly runs out of power depending on the conditions, leading to the reduction in work efficiency in the entire work site.

The present disclosure provides a vehicle control device and a vehicle management system capable of avoiding running out of power in a work vehicle in the whole of a planned route on which the work vehicle travels and suppressing reduction in work efficiency.

Solution to Problem

One aspect of the disclosure is a vehicle control device mounted in a work vehicle including a power receiving device that receives supply of power from an external power feeding device, an electrical storage device charged with the power supplied from the power receiving device, and a travel device that generates a driving force with power supplied from the electrical storage device or the power receiving device. The vehicle control device comprises a zone information acquiring section and a travel control section. The zone information acquiring section acquires zone information on a zone included in a planned route of the work vehicle. The zone information includes information on one or more charging zones in which the power feeding device is installed and the work vehicle travels while the electrical storage device is charged and information on one or more non-charging zones in which the power feeding device is not installed and the work vehicle travels while the power of the electrical storage device is supplied to the travel device to consume the power of the electrical storage device. The travel control section controls the travel device such that a charged power amount of the electrical storage device at an ending point of each of the charging zones becomes larger than a power consumption amount of the travel device in the non-charging zone having the ending point as a starting point.

Advantageous Effects of Invention

The one aspect of the disclosure can provide the vehicle control device capable of avoiding running out of power in a work vehicle in the whole of a planned route on which the work vehicle travels and suppressing reduction in work efficiency.

Brief Description of Drawings

Fig. 1 is a schematic diagram of a work site illustrating Embodiment 1 of a vehicle management system according to the disclosure.
Fig. 2 is a block diagram illustrating Embodiment 1 of the vehicle management system according to the disclosure.
Fig. 3 is a function block diagram illustrating Embodiment 1 of a vehicle control device according to the disclosure.
Fig. 4 is a flowchart describing an operation of the vehicle control device illustrated in Fig. 3.
Fig. 5 is a flowchart describing a process for controlling a travel device illustrated in Fig. 4 in detail.
Fig. 6 is a flowchart illustrating a process for calculating a target speed illustrated in Fig. 5 in detail.
Fig. 7 is a block diagram of a vehicle management device in Embodiment 2 of a vehicle control system according to the disclosure.
Fig. 8 is a schematic diagram illustrating an exemplary location at which a power feeding device of the vehicle management system in Embodiment 2 is installed.
Fig. 9 is a flowchart describing an operation in Embodiment 3 of the vehicle control system according to the disclosure.
Fig. 10 is a schematic diagram illustrating an exemplary speed adjustment zone in a planned route of a work vehicle.

Description of Embodiments

The following describes a vehicle control device and a vehicle management system according to the disclosure with reference to the drawings.

[Embodiment 1]

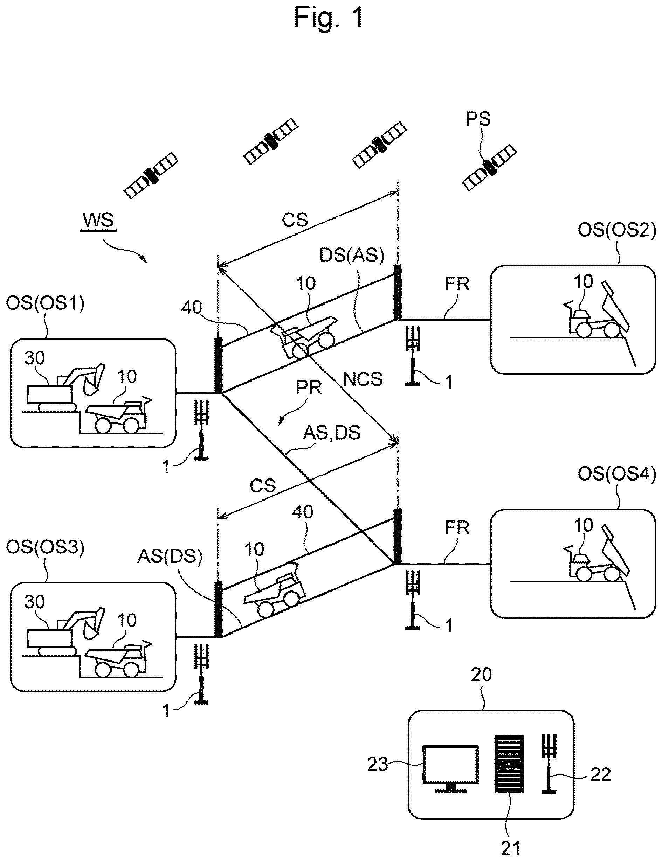

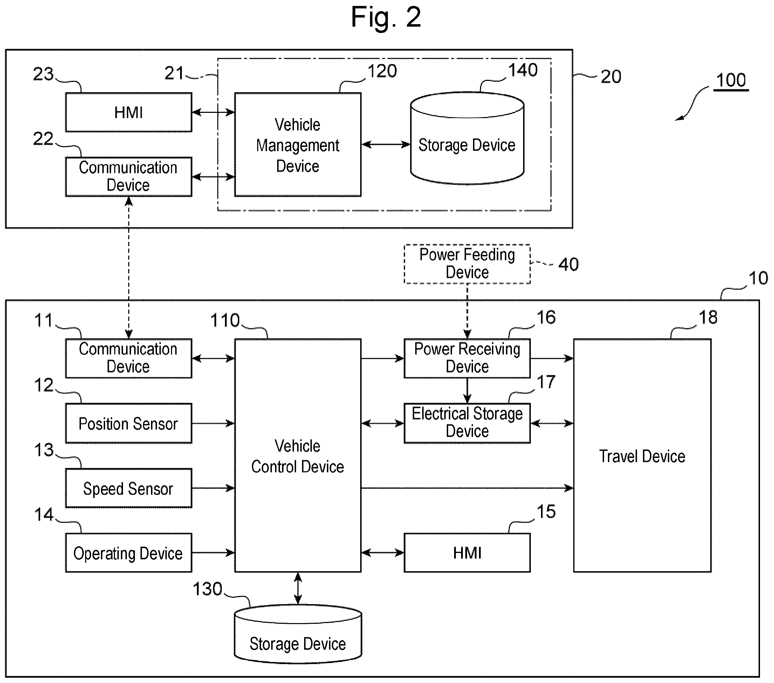

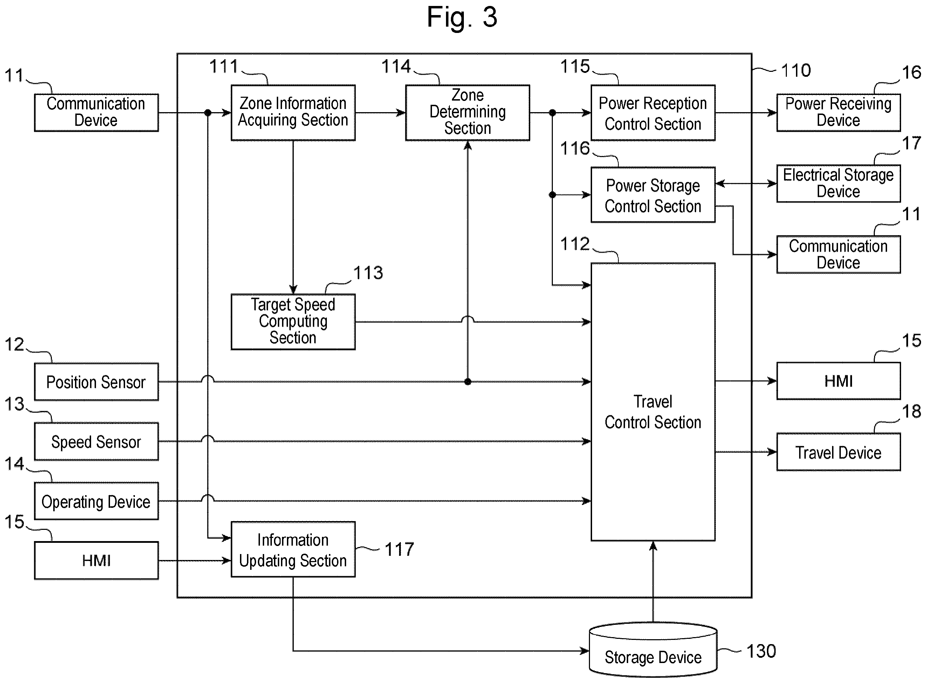

Fig. 1 and Fig. 2 are a schematic diagram of a work site WS and a block diagram of a vehicle management system 100, respectively illustrating Embodiment 1 of the vehicle management system according to the disclosure. Fig. 3 is a function block diagram of a vehicle control device 110 of Fig. 2 as an embodiment of the vehicle control device according to the disclosure.
The vehicle management system 100 of the embodiment is a system, for example, operated at the work site WS, such as a mine, to manage operations of a plurality of work vehicles 10, such as a dump truck. The vehicle management system 100 includes, for example, vehicle control devices 110 mounted in the respective plurality of work vehicles 10 and a vehicle management device 120 installed outside the work vehicles 10 and configured to communicate with the plurality of vehicle control devices 110.
In Fig. 2, for convenience of illustration, only one work vehicle 10 and one vehicle control device 110 mounted in the work vehicle 10 are illustrated, but actually, the vehicle management device 120 is configured to communicate with the plurality of vehicle control devices 110 mounted in the plurality of work vehicles 10. The vehicle management device 120 is configured by, for example, a server 21 installed at the work site WS of the work vehicle 10 or a vehicle management center 20 apart from the work site WS of the work vehicle 10.
The plurality of vehicle control devices 110 mounted in the respective work vehicles 10 are connected to the vehicle management device 120 provided outside the work vehicles 10 in a manner of being capable of communicating information, for example, via a wireless communication line. More specifically, the work vehicle 10 includes a communication device 11 that is a wireless communication instrument, and the vehicle management center 20 is provided with a communication device 22 that is a wireless communication instrument or a wired communication instrument. At the work site WS of the work vehicle 10, for example, a plurality of wireless base stations 1 are installed.
The vehicle control device 110 transmits information to the vehicle management device 120, for example, via the communication device 11 of the work vehicle 10, the wireless base station 1 at the work site, and the communication device 22 of the vehicle management center 20. The vehicle management device 120 transmits information to the vehicle control device 110 via the communication device 22 of the vehicle management center 20, the wireless base station 1 at the work site, and the communication device 11 of the work vehicle 10. A communication line between the vehicle control device 110 and the vehicle management device 120 may include a wired communication line or a satellite communication line.
The work site WS includes a planned route PR on which the plurality of work vehicles 10 travel. Each of the work vehicles 10, for example, travels around the planned route PR. The planned route PR is, for example, a transportation route on which the work vehicles 10 transport loads, and includes an ascending slope AS, a descending slope DS, a flat road FR, and an operation spot OS. In the example illustrated in Fig. 1, an opposite lane of the ascending slope AS is the descending slope DS, and an opposite lane of the descending slope DS is the ascending slope AS. The operation spot OS includes, for example, loading spots OS1, OS3 and accumulation spots OS2, OS4.

At the loading spots OS1, OS3 as the operation spots OS, the work vehicle 10 performs a loading work in cooperation with a working machine 30, for example, a hydraulic excavator. In the loading work, the work vehicle 10 stops at predetermined positions of the loading spots OS1, OS3, and the working machine 30 loads a loading cargo, for example, ore, crushed stone, or soil, on a body of the work vehicle 10. At the accumulation spots OS2, OS4 as the operation spots OS, for example, the work vehicle 10 performs an unloading work of dropping the loading cargo from the body by raising a front end of the body on which the loading cargo is loaded.

The planned route PR in the work site WS includes one or more charging zones CS in which a power feeding device 40 is installed and one or more non-charging zones NCS without the power feeding device 40. The power feeding device 40 includes, for example, a trolley wire connected to an electrical substation and configured to transmit power from a power plant. The work vehicle 10 receives power from the power feeding device 40 during traveling in the charging zone CS of the planned route PR. That is, the charging zone CS is a zone in which the power feeding device 40 is installed and the work vehicle 10 travels while an electrical storage device 17 of the work vehicle 10 is charged. The non-charging zone NCS is a zone in which the power feeding device 40 is not installed and the work vehicle 10 travels while the power of the electrical storage device 17 in the work vehicle 10 is supplied to a travel device 18 of the work vehicle 10, thereby consuming the power of the electrical storage device 17.

In this embodiment, a case where the power from the power feeding device 40 is charged to the electrical storage device 17 and also supplied to the travel device 18 in the work vehicle 10 in the charging zone CS, thus the work vehicle 10 travels with the power from the power feeding device 40 is described. However, the configuration of the work vehicle 10 is not limited to this. For example, in the charging zone CS, it is only necessary that the electrical storage device 17 has been charged, and the power of the electrical storage device 17 may be partially supplied to the travel device 18 of the work vehicle 10. In other words, the charging zone CS only needs to be a zone in which the work vehicle 10 travels with the power from the power feeding device 40 or the power of the electrical storage device 17, or both of the powers while the electrical storage device 17 is charged.

As illustrated in Fig. 2, the work vehicle 10 includes, for example, a communication device 11, a position sensor 12, a speed sensor 13, an operating device 14, and a human-machine interface (HMI) 15. The work vehicle 10 includes, for example, a power receiving device 16, the electrical storage device 17, and the travel device 18. Furthermore, the work vehicle 10 includes, for example, the vehicle control device 110 and a storage device 130.

The communication device 11 is, for example, a wireless communication device installed in the work vehicle 10, connected to the vehicle control device 110, and communicates with the communication device 22 of the vehicle management center 20 via a wireless communication line. The position sensor 12 includes, for example, a receiver of a global navigation satellite system (GNSS) and an inertial measurement unit (IMU), receives radio waves from a plurality of positioning satellites PS to detect a position of the work vehicle 10, and outputs it to the vehicle control device 110. The position sensor 12 may perform the positioning using a radio wave from a ground station.

The speed sensor 13 detects a speed of the work vehicle 10 and outputs it to the vehicle control device 110. The speed sensor 13 includes, for example, a wheel speed sensor that detects a wheel rotation speed of the work vehicle 10, a receiver of GNSS, an IMU, or a combination thereof. The operating device 14 includes, for example, a steering wheel, an operating lever, an operating button, an accelerator pedal, a brake pedal, and the like, and outputs a signal corresponding to an operation of an operator of the work vehicle 10 to the vehicle control device 110.

The HMI 15 includes, for example, a display device, a speaker, a touch panel, a keyboard, and the like. The HMI 15, for example, notifies the operator of the work vehicle 10 of information based on the signal input from the vehicle control device 110, accepts the input of the information from the operator of the work vehicle 10, and inputs it to the vehicle control device 110,

The power receiving device 16 includes, for example, an extendable pantograph. For example, the power receiving device 16 is extended by a manual operation on the operating device 14 by the operator of the work vehicle 10, or automatically extends corresponding to a control signal input from the vehicle control device 110, thereby being connected to the power feeding device 40 to receive the supply of power from the power feeding device 40. The power receiving device 16 supplies the power supplied from the power feeding device 40 to at least one of the electrical storage device 17 and the travel device 18 based on the control signal input from the vehicle control device 110.

For example, the electrical storage device 17 is charged with a power supplied from the power feeding device 40 via the power receiving device 16 in the charging zone CS, and supplies the power to the travel device 18 in the non-charging zone NCS. The electrical storage device 17 is, for example, charged with a regenerative power supplied from a travel motor of the travel device 18 at braking of the work vehicle 10. For example, the electrical storage device 17 includes a plurality of lithium ion secondary batteries and a battery management system (BMS), and outputs various kinds of information including a state of charge to the vehicle control device 110.

The travel device 18 includes, for example, a travel motor of the work vehicle 10, a steering motor of the work vehicle 10, a transmission, and a braking device. For example, the travel device 18 drives the travel motor with the power supplied from the power feeding device 40 via the power receiving device 16 to cause the work vehicle 10 to travel in the charging zone CS. For example, the travel device 18 drives the travel motor with the power supplied from the electrical storage device 17 to cause the work vehicle 10 to travel in the non-charging zone NCS.

In a manual operation of the work vehicle 10, the travel device 18 activates the travel motor, the steering motor, the transmission, and the brake based on the control signal input from the vehicle control device 110 corresponding to the operation on the operating device 14 by the operator, thereby causing the work vehicle 10 to travel. In an automatic operation of the work vehicle 10, the travel device 18 activates the travel motor, the steering motor, the transmission, and the brake based on the control signal input from the vehicle control device 110, thereby causing the work vehicle 10 to travel.

The vehicle control device 110 is configured of, for example, one or more microcontrollers including a central processing unit (CPU), memories, such as a RAM and a ROM, a timer, and an input/output section. As described above, the vehicle control device 110 constitutes a part of the vehicle management system 100 of the embodiment. The storage device 130 is, for example, a non-volatile storage medium that is connected to the vehicle control device 110 and allows recording and reading information.

The storage device 130 stores, for example, an operating system (OS), various kinds of control programs, application programs, databases, and the like. The storage device 130 stores, for example, map information of the planned route PR of the work site WS and zone information including information on the one or more charging zones CS and information on the one or more non-charging zones NCS. The vehicle management system 100 may include, for example, the storage device 130.

As described above, the vehicle management center 20 is installed at the work site WS of the work vehicle 10 or a location apart from the work site WS. The vehicle management center 20 includes, for example, the server 21, the communication device 22, and an HMI 23. The server 21 includes, for example, the vehicle management device 120 and a storage device 140. The vehicle management device 120 is configured of, for example, one or more microcontrollers similarly to the vehicle control device 110.

The storage device 140 is a non-volatile storage medium that is connected to the vehicle management device 120 and allows recording and reading information. The storage device 140 stores an OS, control programs, application programs, databases, and the like similarly to the storage device 130. The storage device 140 stores, for example, map information of the planned route PR of the work site WS and zone information including information on the one or more charging zones CS and information on the one or more non-charging zones NCS similarly to the storage device 130. The storage device 140 stores, for example, route information of the respective work vehicles 10. The vehicle management system 100 may include, for example, the storage device 140.

Table 1 below illustrates exemplary route information RI of the respective work vehicles 10 stored in the storage device 140 of the vehicle management center 20. The route information RI has, for example, a table format as illustrated in Table 1, and includes vehicle identification information and the planned routes PR of the respective work vehicles 10. The planned route PR is, for example, a travel route from one operation spot OS to another operation spot OS. More specifically, the planned route PR is, for example, a route from the loading spot OS1, OS3 to the accumulation spot OS2, OS4, or from the accumulation spot OS2, OS4 to the loading spot OS1, OS3.

[Table 1]

| Route Information RI | |
|---|---|
| Vehicle ID | Planned Route PR |
| vehicle_1 | Loading Spot OS1 → Accumulation Spot OS2 |
| vehicle_2 | Loading Spot OS3 → Accumulation Spot OS4 |
| ... | ... |
| vehicle_m | Accumulation Spot OS2 → Loading Spot OS1 |
| vehicle_m+1 | Accumulation Spot OS4 → Loading Spot OS3 |

Table 2 below illustrates exemplary zone information SI stored in the storage device 130 of the work vehicle 10 and the storage device 140 of the vehicle management center 20. The zone information SI has, for example, a table format as illustrated in Table 2, and includes information on a zone ID, a distance, a standard speed, a standard power consumption amount, whether or not the power feeding device 40 is installed, a coordinate point sequence, and the like. The zone ID is assigned to each of zones into which the planned route PR is divided. That is, the zone information SI includes information on one or more charging zones CS in which the power feeding device 40 is installed and information on one or more non-charging zones NCS in which the power feeding device 40 is not installed.

[Table 2]

| Zone Information SI | | | | | |
|---|---|---|---|---|---|
| Zone ID | Distance [m] | Standard Speed [km/h] | Standard Power Consumption Amount [kWh] | Power Feeding Device | Coordinate Point Sequence |
| 1 | 100 | 50 | 10 | None | (x1, y1, z1) ... |
| 2 | 200 | 50 | 20 | None | (x2, y2, z2) ... |
| 3 | 100 | 30 | 20 | None | (x3, y3, z3) ... |
| ... | ... | ... | ... | ... | ... |
| n | 100 | 40 | 10 | Installed | (xn, yn, zn) ... |
| n+1 | 200 | 50 | 20 | None | (xn+1, yn+1,zn+1) ... |

The communication device 22 is, for example, connected to the wireless base station 1 via a wired communication line. The communication device 22 may be a wireless communication device installed in the vehicle management center 20 and connected to the wireless base station 1 via a wireless communication line. The communication device 22 is connected to the communication device 11 of the work vehicle 10 so as to be able to communicate information via a wired communication line and/or a wireless communication line. The HMI 23 includes, for example, a display device, a touch panel, a keyboard, a computer mouse, and a speaker. The HMI 23 notifies a user of the information input from the vehicle management device 120, and accepts the input of the information by the user and outputs the input information to the vehicle management device 120.

Fig. 3 is a function block diagram of the vehicle control device 110 mounted in the work vehicle 10 illustrated in Fig. 2. The vehicle control device 110 includes, for example, a zone information acquiring section 111 and a travel control section 112. The vehicle control device 110 further includes, for example, a target speed computing section 113 and a zone determining section 114. The vehicle control device 110 may include, for example, a power reception control section 115, a power storage control section 116, and an information updating section 117. The respective sections of the vehicle control device 110 represent, for example, functions of the vehicle control device 110 achieved by the CPU executing the programs stored in the memory and the storage device 130.

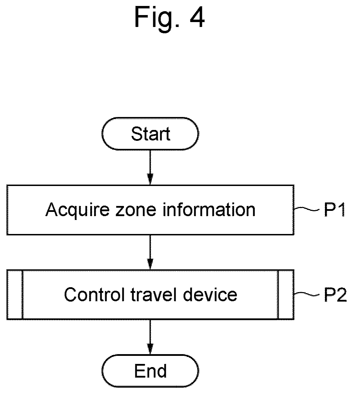

The following describes an operation of the vehicle control device 110 mounted in each of the work vehicles 10 with reference to Fig. 4 to Fig. 6. Fig. 4 is a flowchart describing the operation of the vehicle control device 110 of the embodiment. The vehicle control device 110 mounted in each of the work vehicles 10 performs a process P1 for acquiring the zone information SI first. In the process P1, the zone information acquiring section 111 of the vehicle control device 110 acquires the zone information SI, which is transmitted from the vehicle management device 120 of the vehicle management center 20 via the communication device 22, via the communication device 11 of the work vehicle 10.

Here, the zone information SI acquired by the zone information acquiring section 111 of the vehicle control device 110 includes, for example, as illustrated in Table 2 described above, the information on the zone ID, the distance, a target speed, a power consumption, and whether or not the power feeding device is installed for each of the zones into which the planned route PR of the work vehicle 10 in which the vehicle control device 110 is mounted is divided. For example, the information updating section 117 additionally stores the acquired zone information SI in the storage device 130 when the zone information SI acquired via the communication device 11 is not stored in the storage device 130.

When the additionally acquired zone information SI is different from the zone information SI stored in the storage device 130, the information updating section 117 updates the past zone information SI stored in the storage device 130 to the additionally acquired latest zone information SI. For example, the information updating section 117 acquires the route information RI, which is as illustrated in Table 1, of the work vehicle 10 as a control target via the communication device 11, and stores it in the storage device 130 or update the route information RI stored in the storage device 130. For example, the information updating section 117 may acquire the zone information SI and the route information RI input by the operator of the work vehicle 10 via the HMI 15 and store them in the storage device 130.

Next, the vehicle control device 110 executes a process P2 for controlling the travel device 18. In the process P2, the travel control section 112 controls the travel device 18 such that in the planned route PR of the work vehicle 10, a charged power amount of the electrical storage device 17 at an ending point of each charging zone CS becomes larger than a power consumption amount of the travel device 18 in the non-charging zone NCS having the ending point of the charging zone CS as a starting point.

Here, a power amount E [kWh] charged to the electrical storage device 17 in each of the charging zones CS can be calculated with a formula (1) below, for example, having a charging speed to the electrical storage device 17 defined as cr [kWh/s], a distance of each of the charging zones CS defined as L [m], a speed of the work vehicle 10 traveling in each of the charging zones CS defined as V [m/s].

$$E = cr \times L/V \qquad \dots (1)$$

Accordingly, when the power consumption amount in the non-charging zone NCS is defined as Ed [kWh], by satisfying E > Ed, the charged power amount E of the electrical storage device 17 in the charging zone CS immediately before the non-charging zone NCS becomes larger than the power consumption amount Ed in the non-charging zone NCS. As a result, it can be avoided that the work vehicle 10 runs out of power in the non-charging zone NCS.

When the work vehicle 10 runs out of power in the non-charging zone NCS, the work vehicle 10 cannot travel by itself, and for example, the work vehicle 10 requires towing by another work vehicle 10 or charging by a mobile charging device, thus leading to reduction in productivity of the work site WS. To satisfy the charged power amount E > the power consumption amount Ed described above to avoid running out of power in the work vehicle 10, it is necessary to consider the charging speed cr in the charging zone CS to ensure a charging time Tc = L/V in the charging zone CS.

The longer the distance L of the charging zone CS, and the lower the speed V of the work vehicle 10 traveling in the charging zone CS, the more increased the charging time Tc can be. That is, to increase the time of staying in the charging zone CS, it is necessary to increase the distance L of the charging zone CS or lower the speed V of the work vehicle 10 traveling in the charging zone CS. However, to increase the distance L of the charging zone CS, it is necessary to increase an installation distance of the power feeding device 40, and it causes increase in cost. Additionally, lowering the speed V of the work vehicle 10 more than necessary reduces the productivity of the work site WS.

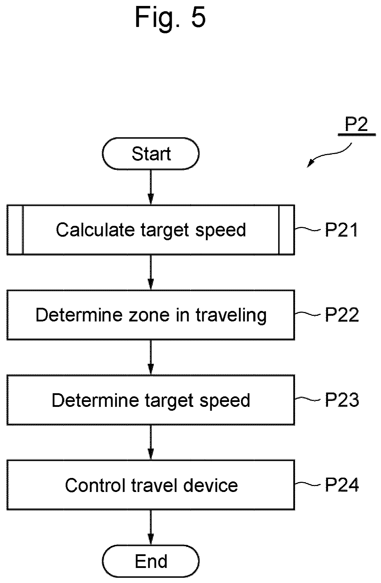

Fig. 5 is a flowchart describing the process P2 for controlling the travel device 18 illustrated in Fig. 4 in detail. When the process P2 illustrated in Fig. 5 is started, first, the vehicle control device 110 executes a process P21 for calculating the target speed. In the process P21, for example, the target speed computing section 113 calculates the target speeds of the work vehicle 10 in the respective charging zones CS and the respective non-charging zones NCS so as to have the charged power amount of the electrical storage device 17 at the ending point of the charging zone CS larger than the power consumption amount of the travel device 18 consumed during traveling in the non-charging zone NCS having the ending point of the charging zone CS as the starting point based on the zone information SI acquired from the zone information acquiring section 111.

For example, assume that when the target speeds of the charging zone CS and the non-charging zone NCS are set to speed limits of the respective zones, the charged power amount of the electrical storage device 17 at the ending point of the charging zone CS is smaller than the power consumption amount of the travel device 18 consumed during traveling in the non-charging zone NCS having the ending point of the charging zone CS as the starting point. In this case, for at least one of the charging zone CS or the non-charging zone NCS, the target speed of the work vehicle 10 is set to be lower than the speed limit. Thus, the charged power amount of the electrical storage device 17 at the ending point of the charging zone CS is set to be larger than the power consumption amount of the travel device 18 consumed during traveling in the non-charging zone NCS having the ending point of the charging zone CS as the starting point, thus avoiding the running out of power in the work vehicle 10.

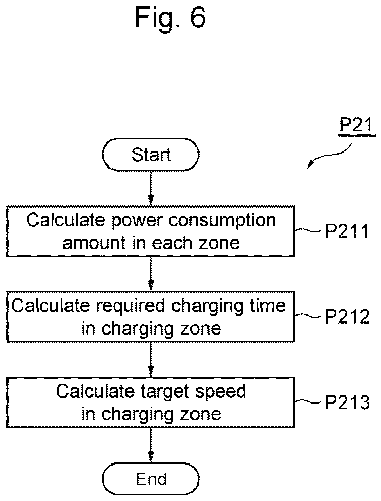

Fig. 6 is a flowchart illustrating the process P21 for calculating the target speed illustrated in Fig. 5 in detail. When the process P21 illustrated in Fig. 6 is started, first, the target speed computing section 113 executes a process P211 for calculating the power consumption amounts of the travel device 18 consumed during traveling in the respective charging zones CS and the respective non-charging zones NCS. In the process P211, for example, the target speed computing section 113 calculates the power consumption amounts of the travel device 18 in the respective zones based on the coordinate point sequences and the standard speeds of the respective zones, a weight of the work vehicle 10 including the loading cargo, and the like.

In more detail, the power consumption amount of the travel device 18 can be calculated as a sum of a change in position energy of the work vehicle 10, a change in kinetic energy of the work vehicle 10, and other power consumptions. Here, the change in position energy of the work vehicle 10 depends on the weight of the work vehicle 10 including the loading cargo, a travel distance of the work vehicle 10, and a slope of the travel route of the work vehicle 10, and the change in kinetic energy depends on the weight of the work vehicle 10 including the loading cargo and the speed of the work vehicle 10. The other power consumptions are obtained as a product of power consumptions of auxiliary machines, such as a radiator, and the time.

Next, for example, the target speed computing section 113 executes a process P212 for calculating a required charging time in each of the charging zones CS. In more detail, for example, the target speed computing section 113 calculates the charging time Tc necessary in each of the charging zones CS with a formula (2) below. In the formula (2), Ed indicates the power consumption amount of the travel device 18 in each of the non-charging zones NCS, and cr indicates the charging speed of each of the charging zones CS.

$$Tc = Ed/cr \quad \dots (2)$$

The charging speed cr from the power feeding device 40 to the electrical storage device 17, that is, a charge amount per unit time in each of the charging zones CS varies depending on the power supplied from the power feeding device 40 and the charge/discharge performance of the electrical storage device 17. Specifically, the power feeding device 40 supplies the power transmitted from a power plant to the electrical storage device 17 via the power receiving device 16. Therefore, for example, when the power plant generates electricity using a renewable energy, such as solar and wind power, the amount of power generation is restricted depending on the weather and the time of day. In this case, the charging speed cr can be estimated based on a predicted value of the amount of power supply from the power feeding device 40.

By satisfying the formula (2), the power consumption amount of the travel device 18 in each of the non-charging zones NCS can be covered with the charged power amount in the charging zone CS immediately before the non-charging zone NCS. Next, for example, the target speed computing section 113 executes a process P213 for calculating the target speeds of the respective charging zones CS. In the process P213, for example, the target speed computing section 113 calculates a target speed Vc of the work vehicle 10 in each of the charging zones CS with a formula (3) below. In the formula (3), L indicates a distance of each of the charging zones CS, and Tc indicates the charging time calculated with the formula (2).

$$Vc = L/Tc \quad \dots (3)$$

Here, for example, the target speed computing section 113 may calculate the target speed at which a traveling time of the work vehicle 10 traveling on the planned route PR becomes shortest. Specifically, the target speed computing section 113 can set a maximum speed capable of ensuring the charging time Tc to the target speed Vc of the charging zone CS. For example, the target speed computing section 113 may increase the target speed of the work vehicle 10 in each of the non-charging zones NCS in a range not exceeding the charged power amount of the charging zone CS immediately before each of the non-charging zones NCS. This allows improving the productivity in the transportation work of the work vehicle 10.

For example, the target speed computing section 113 may increase the target speed of the work vehicle 10 in a range in which the charged power amount, that is, a state of charge of the electrical storage device 17 does not become equal to or less than a predetermined value, thereby setting the traveling time of the work vehicle 10 traveling on the planned route PR to the shortest. For example, even when the power consumption amount in one non-charging zone NCS exceeds the charged power amount in the charging zone CS immediately before the one non-charging zone NCS, the power may be charged to the electrical storage device 17 in the charging zones CS before and after these zones by the amount of shortage, thereby avoiding the running out of power in the work vehicle 10 as a whole of the planned route PR.

Thus, the process P21 for calculating the target speed illustrated in Fig. 5 and Fig. 6 ends. After the end of the process P21, for example, as illustrated in Fig. 5, the vehicle control device 110 executes a process P22 for determining a zone in which the work vehicle 10 is traveling. In the process P22, the zone determining section 114 acquires position information of the work vehicle 10 input from the position sensor 12 mounted in the work vehicle 10 and zone information SI input from the zone information acquiring section 111. The zone determining section 114 determines whether the zone in which the work vehicle 10 is traveling is one of the one or more charging zones CS or the one or more non-charging zones NCS, based on the position information of the work vehicle 10 and the zone information SI.

Next, the vehicle control device 110 executes a process P23 for determining the target speed. In the process P23, the travel control section 112 acquires the speed of the work vehicle 10 from the speed sensor 13 mounted in the work vehicle 10. The travel control section 112 determines the target speed corresponding to the charging zone CS or the non-charging zone NCS determined by the zone determining section 114 among the target speeds calculated by the target speed computing section 113 as the target speed of the work vehicle 10.

Next, the vehicle control device 110 executes a process P24 for controlling the travel device 18. In the process P24, the travel control section 112 controls the travel device 18 to cause the work vehicle 10 to travel at the target speed determined in the previous process P23. For example, when the automatic operation of the work vehicle 10 is performed by the vehicle control device 110, the travel control section 112 controls the travel device 18 so as to make a deviation between the speed of the work vehicle 10 acquired by the speed sensor 13 and the target speed close to 0.

When the operator performs the manual operation of the work vehicle 10, for example, the travel control section 112 controls the travel control section 112 to limit the upper limit of the speed of the work vehicle 10 in each of the charging zones CS to the target speed Vc in each of the charging zones CS. For example, the travel control section 112 displays the target speed on the display device constituting the HMI 15, or outputs a voice from the speaker constituting the HMI 15, thereby encouraging the operator to cause the work vehicle 10 to travel at the target speed.

For example, when the zone determining section 114 determines that the work vehicle 10 is traveling in the charging zone CS, the power reception control section 115 extends the power receiving device 16 to contact the power feeding device 40. For example, when the zone determining section 114 determines that the work vehicle 10 is traveling in the non-charging zone NCS, the power reception control section 115 contracts the power receiving device 16. The power reception control section 115 may extend and contract the power receiving device 16 based on the operation by the operator of the work vehicle 10.

For example, when the zone determining section 114 determines that the work vehicle 10 is traveling in the charging zone CS, the power storage control section 116 controls the electrical storage device 17 to charge the secondary battery of the electrical storage device 17 with the power supplied from the power feeding device 40. For example, when the zone determining section 114 determines that the work vehicle 10 is traveling in the non-charging zone NCS, the power storage control section 116 controls the electrical storage device 17 to supply the power charged in the secondary battery of the electrical storage device 17 to the travel device 18.

For example, the power storage control section 116 may switch the charge and the discharge of the secondary battery of the electrical storage device 17 based on the operation of the power receiving device 16. Thus, the process P2 illustrated in Fig. 4 and Fig. 5 ends, and the operation of the vehicle control device 110 illustrated in Fig. 4 ends.

The following describes actions of the vehicle control device 110 of the embodiment.

For example, for a super-large dump truck operated at a work site, such as an open-cut mine, a method of traveling by generating electricity with a diesel engine mounted on a vehicle body to drive a motor is popular. However, since the energy necessary for transporting work of ore and the like is very large, there is a problem that such a method increases the global greenhouse gas emission. Therefore, a dump truck that uses an electrical storage device mounted on a vehicle body to drive a motor instead of the electric generation with the diesel engine has been developed.

However, for example, since the capacity of the electrical storage device using the secondary battery, such as a lithium ion secondary battery, is insufficient to the amount of energy necessary for the transporting work, the work vehicle frequently requires to be charged. Therefore, for example, when charging is performed at a charging station installed in a parking area, the transporting work is frequently halted. On the other hand, to achieve the high productivity of the work site, such as a mine, the work of loading from the working machine to the work vehicle needs to be continuously performed. Considering that the work vehicle halts the work due to the charging, to avoid the halt of the loading work of the working machine, the larger number of work vehicles than the conventional one are necessary for one working machine, thus causing the increase in cost.

The electric vehicle disclosed in Patent Literature 1 is configured to store supplied power in a storage battery while traveling on a power feeding lane that can perform contactless power supply. However, depending on the specification of the power feeding lane, the charging speed to the storage battery is insufficient and the storage battery fails to be sufficiently charged, thus possibly causing the running out of power in the electric vehicle during the work, such as a transporting work. Further, when the speed of the electric vehicle traveling on the power feeding lane is lowered to avoid the running out of power in the electric vehicle, the operation efficiency in the entire work site possibly decreases.

In contrast, the vehicle control device 110 of the embodiment is an in-vehicle control device mounted in the work vehicle 10. The work vehicle 10 includes the power receiving device 16 that receives the power supplied from the external power feeding device 40, the electrical storage device 17 charged with the power supplied from the power receiving device 16, and the travel device 18 that generates the driving force with the power supplied from the electrical storage device 17 or the power receiving device 16. The vehicle control device 110 includes the zone information acquiring section 111 and the travel control section 112. The zone information acquiring section 111 acquires the zone information that is information on the zone included in the planned route PR of the work vehicle 10. The zone information includes the information on one or more charging zones in which the power feeding device 40 is installed and the work vehicle travels while the electrical storage device 17 is charged, and information on one or more non-charging zones in which the power feeding device 40 is not installed and the work vehicle travels while the power of the electrical storage device 17 is supplied to the travel device 18 to consume the power of the electrical storage device 17. The travel control section 112 controls the travel device 18 such that the charged power amount of the electrical storage device 17 at an ending point of each of the charging zones CS becomes larger than the power consumption amount of the travel device 18 in the non-charging zone NCS having the ending point of the charging zone CS as a starting point.

With this configuration, according to the vehicle control device 110 of the embodiment, in each of the charging zones CS, the larger amount of the power can be stored in the electrical storage device 17 than the amount of the power consumed by the travel device 18 in the non-charging zone NCS next to the charging zone CS. Accordingly, the running out of power in the work vehicle 10 can be avoided in the entire planned route PR on which the work vehicle 10 travels. By avoiding the running out of power in the work vehicle 10, the reduction in operation efficiency at the work site WS can be suppressed.

The vehicle control device 110 of the embodiment further includes the target speed computing section 113 and the zone determining section 114 as described above. The target speed computing section 113 calculates the target speeds of the work vehicle 10 in the respective charging zones CS and the respective non-charging zones NCS so as to have the charged power amount of the electrical storage device 17 larger than the power consumption amount of the travel device 18 based on the zone information SI acquired from the zone information acquiring section 111. The zone determining section 114 determines whether the zone in which the work vehicle 10 is traveling is one of the one or more charging zones CS or the one or more non-charging zones NCS, based on the position information of the work vehicle 10 input from the position sensor 12 mounted in the work vehicle 10 and the zone information SI input from the zone information acquiring section 111. The travel control section 112 acquires the speed of the work vehicle 10 from the speed sensor 13 mounted in the work vehicle 10. The travel control section 112 controls the travel control section 112 so as to cause the work vehicle 10 to travel at the target speed corresponding to the charging zone CS or the non-charging zone NCS determined by the zone determining section 114 among the target speeds calculated by the target speed computing section 113.

With this configuration, the vehicle control device 110 of the embodiment can control the travel device 18 with the travel control section 112 to cause the work vehicle 10 to travel at the target speeds corresponding to the respective charging zones CS and non-charging zones NCS. Consequently, the charged power amount of the electrical storage device 17 at the ending point of each of the charging zones CS becomes larger than the power consumption amount of the travel device 18 in the non-charging zone NCS having the ending point of the charging zone CS as the starting point. Accordingly, the running out of power in the work vehicle 10 can be avoided in the entire planned route PR on which the work vehicle 10 travels, and the reduction in operation efficiency at the work site WS can be suppressed.

In the vehicle control device 110 of the embodiment, the target speed computing section 113 calculates the target speed at which the traveling time of the work vehicle 10 traveling on the planned route PR becomes shortest. With this configuration, the vehicle control device 110 of the embodiment improves the productivity of the transportation work by the work vehicle 10, thus allowing the improvement of the operation efficiency at the work site WS.

In the vehicle control device 110 of the embodiment, the target speed computing section 113 calculates the target speeds in the respective charging zones CS based on the charging speeds cr from the power feeding device 40 to the electrical storage device 17 in the respective charging zones CS. With this configuration, the vehicle control device 110 of the embodiment can charge the sufficient amount of power to the electrical storage device 17 without the reduction of the speed of the work vehicle 10 more than necessary. Even when the amount of power that the power feeding device 40 can supply varies, the running out of power in the work vehicle 10 can be avoided.

In the vehicle control device 110 of the embodiment, the travel control section 112 limits the upper limit of the speed of the work vehicle 10 in each of the charging zones CS to the target speed Vc in each of the charging zones CS. With this configuration, for example, the vehicle control device 110 of the embodiment can avoid the shortage of the charged power amount of the electrical storage device 17 due to the excess of the target speed of the work vehicle 10 in the charging zone CS during the manual operation of the work vehicle 10.

As described above, the embodiment can provide the vehicle control device 110 capable of avoiding the running out of power in the work vehicle 10 in the entire planned route PR on which the work vehicle 10 travels, and suppressing the reduction in operation efficiency.

[Embodiment 2]

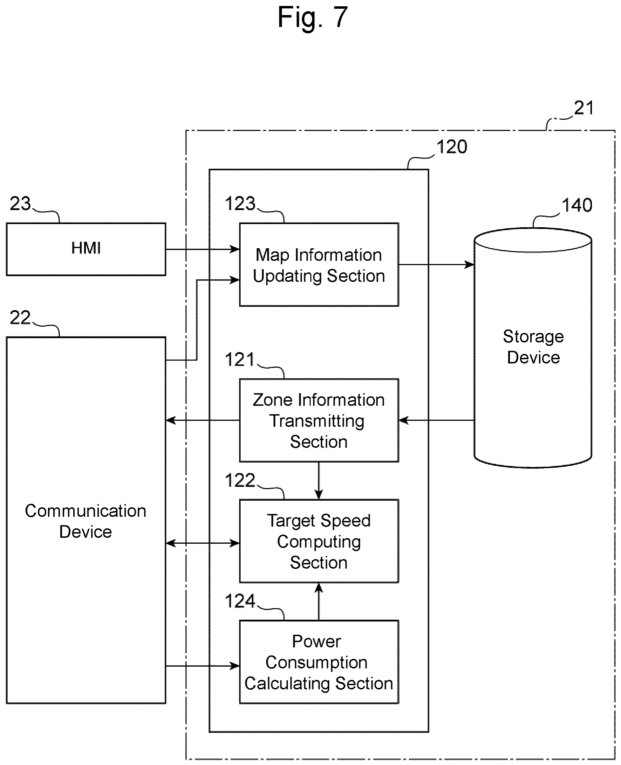

The following describes an embodiment of a vehicle management system according to the disclosure with reference to Fig. 1 to Fig. 3, Fig. 7, and Fig. 8. Fig. 7 is a function block diagram of a vehicle management device 120 constituting a vehicle management system 100 of the embodiment. The vehicle management system 100 of the embodiment includes, similarly to Embodiment 1 described above, vehicle control devices 110 mounted in the respective plurality of work vehicles 10 and a vehicle management device 120 installed outside the plurality of work vehicles 10 and configured to communicate with the plurality of vehicle control devices 110.

The vehicle control device 110 constituting the vehicle management system 100 of the embodiment has a configuration similar to that of the vehicle control device 110 of Embodiment 1 described above except that the target speed computing section 113 illustrated in Fig. 3 is not provided. The vehicle management device 120 constituting the vehicle management system 100 of the embodiment includes a zone information transmitting section 121 and a target speed computing section 122 as illustrated in Fig. 7.

The vehicle management device 120 includes, for example, a map information updating section 123 and a power consumption calculating section 124. The respective sections of the vehicle management device 120 represent functions of the vehicle management device 120 achieved by executing the programs stored in the memory or the storage device 140 by the CPU constituting the vehicle management device 120.

For example, the zone information transmitting section 121 transmits the zone information SI as illustrated in Table 2 in Embodiment 1 described above to the vehicle control devices 110 of the respective work vehicles 10 via the communication device 22. For example, the target speed computing section 122 has a function similar to that of the target speed computing section 113 in the vehicle control device 110 in Embodiment 1 described above. That is, the target speed computing section 122 calculates the target speeds of the respective work vehicles 10 and transmits them to the vehicle control devices 110 of the respective work vehicles 10.

Here, for example, the target speed computing section 122 acquires the zone information SI from the zone information transmitting section 121. Then, the target speed computing section 122 calculates the target speeds of the work vehicle 10 in the respective charging zones CS and the respective non-charging zones NCS so as to have the charged power amount of the electrical storage device 17 at the ending point of each charging zone CS larger than the power consumption amount of the travel device 18 in the non-charging zone NCS having the ending point of the charging zone CS as the starting point based on the acquired zone information SI.

For example, the map information updating section 123 updates map information stored in the storage device 140 based on information input via the HMI 23 or information received from the work vehicle 10 via the communication device 22. In more detail, for example, when the shape of the planned route PR, the loading spot OS1, or the accumulation spot OS2 is changed due to a mining work of the working machine 30 and the transportation work of the work vehicle 10, the map information updating section 123 updates the map data stored in the storage device 140 based on information input to reflect the actual shape by the operator via the HMI 23. For example, the map information updating section 123 updates information on the power consumption amount in the respective zones in the map data based on the change of the charged power amount of the electrical storage device 17 received from the work vehicle 10 via the communication device 22.

For example, the power consumption calculating section 124 calculates the power consumption amounts of the work vehicle 10 in the respective zones of the planned route PR including the charging zone CS and the non-charging zone NCS based on the changes in position energy and kinetic energy or the like using the slope of the planned route PR, the weight and the speed of the work vehicle 10 including the loading cargo or the like. For example, the power consumption calculating section 124 may estimate the power consumption of the work vehicle 10 based on the weight of the work vehicle 10 including the loading cargo, the position and the speed of the work vehicle 10, information on the history of the charged power amount of the electrical storage device 17 of the work vehicle 10, and the like.

The vehicle control device 110 mounted in each of the work vehicles 10 includes the zone determining section 114 similarly to Embodiment 1. The zone determining section 114 determines whether the zone in which the work vehicle 10 is traveling is one of the one or more charging zones CS or the one or more non-charging zones NCS, based on the position information of the work vehicle 10 input from the position sensor 12 mounted in the work vehicle 10 and the zone information SI acquired by the zone information acquiring section 111.

The travel control section 112 of the vehicle control device 110 acquires the speed of the work vehicle 10 from the speed sensor 12 mounted in the work vehicle 10. Further, the travel control section 112 controls the travel device 18 so as to cause the work vehicle 10 to travel at the target speed corresponding to the charging zone CS or the non-charging zone NCS determined by the zone determining section 114 among the target speeds of the work vehicle 10 received from the vehicle management device 120.

The vehicle control device 110 mounted in each of the work vehicles 10 includes the power storage control section 116 similarly to Embodiment 1. For example, the power storage control section 116 transmits the charged power amount of the electrical storage device 17 to the vehicle management device 120 of the vehicle management center 20 via the communication device 11. Then, the power consumption calculating section 124 of the vehicle management device 120 calculates the power consumption amount of the work vehicle 10 in the non-charging zone NCS based on the charged power amount received from the vehicle control device 110 when the work vehicle 10 passes through the starting point and the ending point of the non-charging zone NCS.

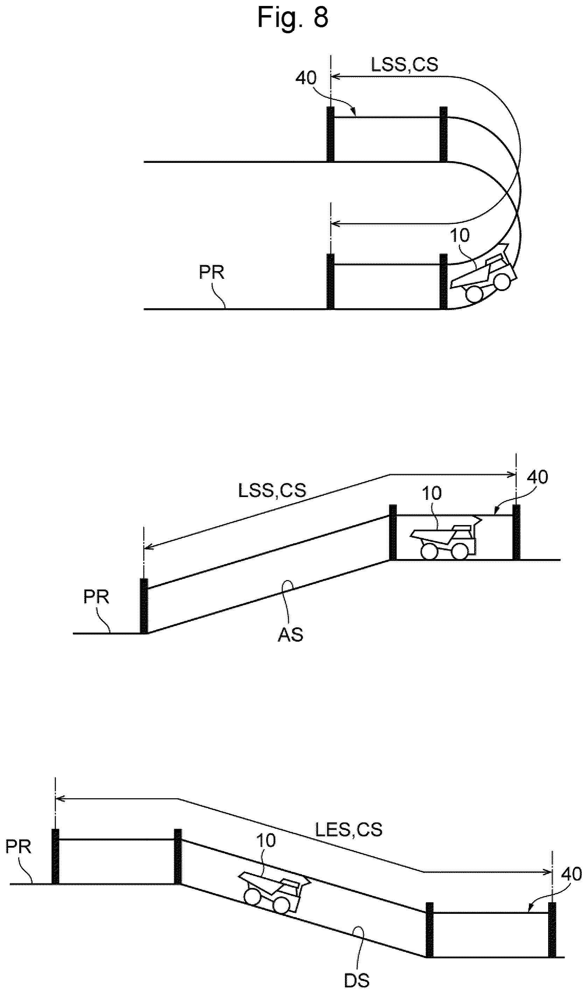

Fig. 8 is a schematic diagram illustrating an exemplary location at which the power feeding device 40 is installed in the vehicle management system 100 of the embodiment. The vehicle management system 100 of the embodiment may further include, for example, the one or more power feeding devices 40. In this case, for example, the power feeding device 40 is installed at a low speed zone LSS or a low power consumption zone LES in the planned route PR of the work vehicle 10.

For example, as illustrated in Fig. 8, the low speed zone LSS includes a curve or a curving part having a predetermined curvature radius or less in which the work vehicle 10 needs to travel at low speed and an ascending slope AS and a part immediately after the ascending slope AS in which the speed of the work vehicle 10 is lowered compared with the other part in the planned route PR. For example, as illustrated in Fig. 8, the low power consumption zone LES includes a descending slope DS and a part before and after the descending slope DS in which the travel device 18 of the work vehicle 10 generates electricity with a regenerative brake.

The following describes actions of the vehicle management system 100 of the embodiment.

As described above, the vehicle management system 100 of the embodiment includes vehicle control devices 110 mounted in the respective plurality of work vehicles 10 and a vehicle management device 120 installed outside the plurality of work vehicles 10 and configured to communicate with the plurality of vehicle control devices 110. The vehicle management device 120 includes the zone information transmitting section 121 that transmits the zone information SI to the vehicle control device 110, and the target speed computing section 122 that calculates the target speeds of the work vehicle 10 in the respective charging zones CS and the respective non-charging zones NCS so as to have the charged power amount larger than the power consumption amount based on the zone information SI and transmits them to the vehicle control device 110. The vehicle control device 110 includes the zone determining section 114 that determines whether the zone in which the vehicle control device 110 is traveling is one of the one or more charging zones CS or the one or more non-charging zones NCS, based on the position information of the work vehicle 10 input from the position sensor 12 mounted in the work vehicle 10 and the zone information SI acquired by the zone information acquiring section 111. The travel control section 112 of the vehicle control device 110 acquires the speed of the work vehicle 10 from the speed sensor 13 mounted in the work vehicle 10, and controls the travel device 18 so as to cause the work vehicle 10 to travel at the target speed corresponding to the charging zone CS or the non-charging zone NCS determined by the zone determining section 114 among the target speeds received from the vehicle management device 120.

With this configuration, the vehicle management system 100 of the embodiment can provide the effects similar to those of the vehicle control device 110 in Embodiment 1 described above. That is, according to the vehicle management system 100 of the embodiment, in each of the charging zones CS, the larger amount of the power can be stored in the electrical storage device 17 of the work vehicle 10 than the amount of the power consumed by the travel device 18 in the non-charging zone NCS next to the charging zone CS. Accordingly, the running out of power in the work vehicle 10 can be avoided in the entire planned route PR on which the work vehicle 10 travels. By avoiding the running out of power in the work vehicle 10, the reduction in operation efficiency at the work site WS can be suppressed.

In the vehicle management system 100 of the embodiment, the vehicle control device 110 includes the power storage control section 116 that transmits the charged power amount of the electrical storage device 17 to the vehicle management device 120. The vehicle management device 120 includes the power consumption calculating section 124 that calculates the power consumption amount of the work vehicle 10 in the non-charging zone NCS based on the charged power amount received from the vehicle control device 110 when the work vehicle 10 passes through the starting point and the ending point of the non-charging zone NCS. With this configuration, according to the vehicle management system 100 of the embodiment, the power consumption amount of the travel device 18 of each of the work vehicles 10 in the non-charging zone NCS can be easily and accurately obtained.

The vehicle management system 100 of the embodiment further includes the power feeding device 40. The power feeding device 40 is installed in the low speed zone LSS in which the speed of each of the work vehicles 10 becomes lower than an average speed of a plurality of the work vehicles 10 traveling on the planned route PR. Alternatively, the power feeding device 40 is installed in the low power consumption zone LES in which the power consumption amount of each of the work vehicles 10 becomes smaller than an average power consumption amount of a plurality of the work vehicles 10 traveling on the planned route PR.

With this configuration, according to the vehicle management system 100 of the embodiment, by installing the power feeding device 40 in the low speed zone LSS in which the work vehicle 10 travels at low speed, the charging time of the electrical storage device 17 in the charging zone CS can be increased while the reduction in productivity of the work site WS is suppressed. By installing the power feeding device 40 in the low speed zone LSS, the distance of the charging zone CS can be decreased, thereby reducing the cost. By installing the power feeding device 40 in the low power consumption zone LES in which the power consumption amount of the work vehicle 10 is small, the larger amount of power can be supplied from the power feeding device 40 to the electrical storage device 17, thereby increasing the charging speed cr.

At the descending slope DS and immediately before the descending slope DS, or at a curve, for example, since the work vehicle 10 is braked with a regenerative brake, the speed limit corresponding to the slope and the curvature radius is set. Therefore, the descending slope DS is not only the low power consumption zone LES but also the low speed zone LSS, and the curve is not only the low speed zone LSS but also the low power consumption zone LES. In addition to the example illustrated in Fig. 8, in the planned route PR, the low speed zone LSS may be a zone in which the speed limit lower than that of the other part is set because of a traffic amount of the work vehicles 10, a distance from a building or a facility, a state of road surface, and the like.

[Embodiment 3]

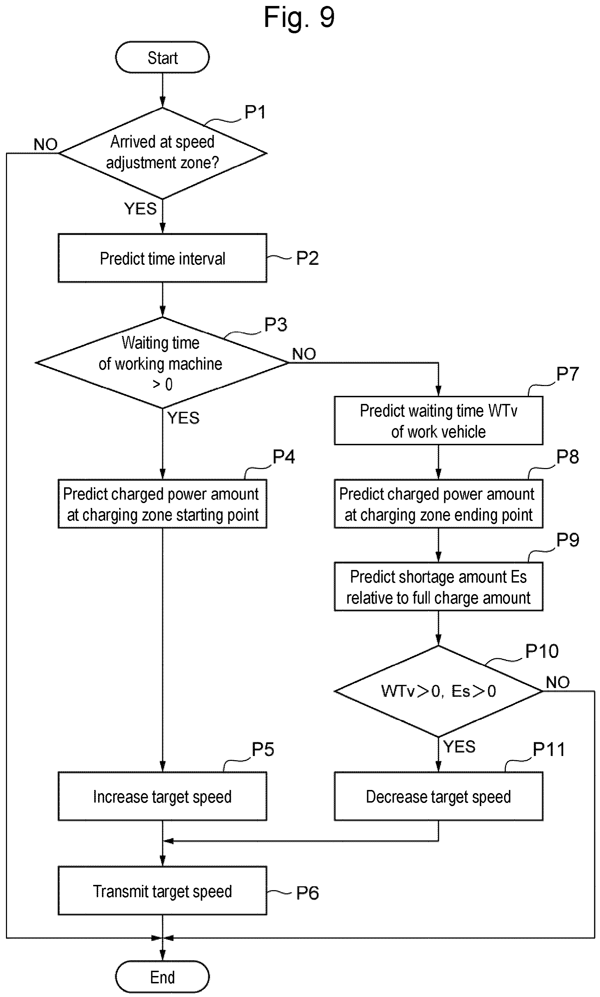

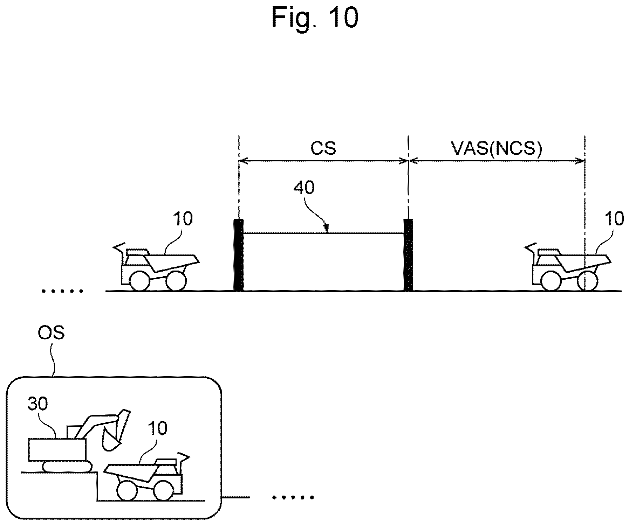

The following describes Embodiment 3 of the vehicle management system according to the disclosure with reference to Fig. 1 to Fig. 3, Fig. 7, Fig. 9, and Fig. 10. Fig. 9 is a flowchart describing an operation of the vehicle management system 100 of the embodiment. Fig. 10 is a schematic diagram illustrating an exemplary speed adjustment zone VAS in the planned route PR of the work vehicle 10.

The vehicle management system 100 of the embodiment is different from the above-described vehicle management system 100 of Embodiment 2 in the operation of the target speed computing section 122 of the vehicle management device 120 illustrated in Fig. 7. Other configurations of the vehicle management system 100 of the embodiment are similar to those of the vehicle management system 100 in Embodiment 2, therefore, the same reference numerals are attached to the similar parts, and the explanation is omitted.

As described above, the planned route PR of the work vehicle 10 in the work site WS includes, for example, the operation spot OS, such as a loading spot OS1 and an accumulation spot OS2, at which the work vehicle 10 stops and performs the works of loading and unloading the loading cargo and the like. When the processing flow illustrated in Fig. 9 is started, the vehicle management system 100 executes a process P1 of determining whether or not the work vehicle 10 as a target of speed adjustment has arrived at a starting point of the speed adjustment zone VAS.

The work vehicle 10 as a target of the speed adjustment in the process P1 is, for example, as illustrated in Fig. 10, a work vehicle 10 traveling toward an operation spot OS following a preceding work vehicle 10 traveling toward the same operation spot OS. For example, the speed adjustment zone VAS is set adjacent to the charging zone CS in the non-charging zone NCS before the charging zone CS, and an ending point of the speed adjustment zone VAS matches the starting point of the charging zone CS. The speed adjustment zone VAS may be apart from the charging zone CS.

In the process P1, for example, the target speed computing section 122 of the vehicle management device 120 installed in the vehicle management center 20 receives position information from the respective work vehicles 10 via the communication device 22, and determines whether or not the following work vehicle 10 as the target has arrived at the starting point of the speed adjustment zone VAS. When the target speed computing section 122 determines that the work vehicle 10 as the target has not arrived at the speed adjustment zone VAS (NO), the vehicle management system 100 ends the processing flow illustrated in Fig. 9. Then, the vehicle management system 100 repeatedly executes the processing flow illustrated in Fig. 9 at a predetermined cycle.

Meanwhile, in the process P1, when the target speed computing section 122 determines that the work vehicle 10 as the target has arrived at the speed adjustment zone VAS (YES), the vehicle management system 100 executes a next process P2. In the process P2, for example, the target speed computing section 122 predicts a time interval from when the preceding work vehicle 10 arrives at the operation spot OS to when the following work vehicle 10 arrives at the operation spot OS based on speeds and distances to the operation spot OS of the respective work vehicles 10.

Next, the vehicle management system 100 executes a process P3 of determining whether or not a waiting time of the working machine 30 is generated before the following work vehicle 10 arrives at the operation spot OS. In the case where the operation spot OS is the loading spot OS1, when the preceding work vehicle 10 arrives at the operation spot OS, the working machine 30 loads the loading cargo on the work vehicle 10. While the loading work by the working machine 30 requires a certain period of time, when the arrival of the following work vehicle 10 at the operation spot OS is delayed, the waiting time of the working machine 30 waiting for the arrival of the following work vehicle 10 is generated.

In more detail, whether or not the waiting time of the working machine 30 is generated can be determined, for example, based on a formula (4) below. In the formula (4), TI indicates the time interval from when the preceding work vehicle 10 arrives at the operation spot OS to when the following work vehicle 10 arrives. WTs indicates a standard waiting time of the following work vehicle 10. LT indicates a loading time necessary for the loading work of the working machine 30 loading the loading cargo on the work vehicle 10.

$$TI > LT + WTs \quad \ldots (4)$$

The standard waiting time WTs of the following work vehicle 10 is set to avoid the reduction in productivity of the work site WS due to the generation of the waiting time of the working machine 30. The time interval TI between the preceding work vehicle 10 and the following work vehicle 10 varies, for example, due to the change of speed of the driving by the operator when the work vehicle 10 is manually operated, the waiting time at a traffic intersection, avoidance of collision with another work vehicle 10, and the like. Therefore, in a case where the loading time LT and the standard waiting time WTs are assumed to have constant values, when the time interval TI meets the formula (4), the waiting time of the working machine 30 is generated.

For example, a waiting time WTm of the working machine 30 can be calculated with a formula (5) below. Note that in the formula (5), the waiting time WTm of the working machine 30 is assumed to be a value of zero or more, and when the waiting time WTm has a negative value, it is defined as the waiting time WTm = 0.

$$WTm = TI - LT + WTs \quad \ldots (5)$$

In the process P3 illustrated in Fig. 9, for example, when the formula (4) is met, or when the waiting time WTm of the working machine 30 based on the formula (5) is larger than zero, the target speed computing section 122 of the vehicle management device 120 determines that the waiting time WTm of the working machine 30 is generated (YES).

In this case, the vehicle management system 100 executes a next process P4. In the process P4, as illustrated in Fig. 10, the target speed computing section 122 of the vehicle management device 120 predicts the charged power amount of the electrical storage device 17 of the following work vehicle 10 at the starting point of the charging zone CS. In more detail, for example, the target speed computing section 122 acquires the current charged power amount of the electrical storage device 17 and the position information from the following work vehicle 10 as the target via the communication device 22.

For example, the target speed computing section 122 acquires the power consumption amount of the work vehicle 10 as the target when traveling from the current position to the starting point of the charging zone CS based on the position information of the work vehicle 10 and the position information of the charging zone CS from the power consumption calculating section 124. Furthermore, the target speed computing section 122 predicts a charged power amount E of the electrical storage device 17 when the work vehicle 10 as the target arrives at the starting point of the charging zone CS based on the current charged power amount and the power consumption amount up to the charging zone CS of the electrical storage device 17 of the work vehicle 10.

Next, the vehicle management system 100 executes a process P5 of increasing the target speed of the following work vehicle 10 as the target. In the process P5, the target speed computing section 122 of the vehicle management device 120 increases the target speed of the work vehicle 10 as the target in the speed adjustment zone VAS. Here, the target speed computing section 122 increases the target speed of the work vehicle 10, for example, in a range in which an increased amount $\Delta E$ of the power consumption of the work vehicle 10 in the speed adjustment zone VAS becomes equal to or less than the charged power amount E of the electrical storage device 17 at the starting point of the charging zone CS predicted in the previous process P4.

The increased amount $\Delta E$ of the power consumption of the work vehicle 10 in the speed adjustment zone VAS can be calculated, for example, based on the speed and the weight including the loading cargo of the work vehicle 10, the slope of the speed adjustment zone VAS, and the like. Then, the vehicle management system 100 executes a process P6 of transmitting the target speed increased in the previous process P5 from the vehicle management device 120 to the work vehicle 10 as the target. This allows increasing the speed without causing the running out of power in the work vehicle 10 as the target in the speed adjustment zone VAS, and reducing the waiting time WTm of the working machine 30 in the operation spot OS or decreasing it to zero. Then, the vehicle management system 100 ends the processing flow illustrated in Fig. 9, and repeatedly executes the processing flow at a predetermined cycle.

In the process P3 described above, when the target speed computing section 122 of the vehicle management device 120 determines that the waiting time WTm of the working machine 30 is not generated (NO), the vehicle management system 100 executes a process P7 of predicting a waiting time WTv of the following work vehicle 10. That is, when the formula (4) is not met and the waiting time WTm of the working machine 30 becomes zero, the waiting time WTv of the following work vehicle 10 is generated until the loading of the loading cargo on the preceding work vehicle 10 ends. The target speed computing section 122 calculates the waiting time WTv of the following work vehicle 10, for example, based on the loading time LT, the standard waiting time WTs, and the time interval TI described above with a formula (6) below.

$$\mathrm{WTv = LT + WTs - TI} \quad \dots (6)$$

Note that the waiting time WTv is assumed to be a value of zero or more, and when the waiting time WTv has a negative value, it is defined as the waiting time WTv = 0. The waiting time WTv of the work vehicle 10 and the waiting time WTm of the work vehicle 10 do not simultaneously have positive values. That is, it is any of that only the waiting time WTm of the working machine 30 is generated, or that only the waiting time WTv of the work vehicle 10 is generated, and it does not occur that the waiting time WTm of the working machine 30 and the waiting time WTv of the work vehicle 10 are simultaneously generated.

Next, the vehicle management system 100 executes a process P8 of predicting the charged power amount of the electrical storage device 17 at the ending point of the charging zone CS of the following work vehicle 10 that has arrived at the speed adjustment zone VAS. In the process P8, for example, the target speed computing section 122 of the vehicle management device 120 acquires the current speed and the current charged power amount of the electrical storage device 17 from the work vehicle 10 as the target via the communication device 22. For example, the target speed computing section 122 calculates the charged power amount of the electrical storage device 17 charged in the charging zone CS based on the target speed of the work vehicle 10 and the charging speed cr of the power feeding device 40.

The target speed computing section 122 acquires, for example, the power consumption amount in the speed adjustment zone VAS corresponding to the current speed of the work vehicle 10 and the power consumption amount in the charging zone CS of the work vehicle 10 from the power consumption calculating section 124. Then, the target speed computing section 122 predicts the charged power amount of the electrical storage device 17 at the ending point of the charging zone CS based on the current charged power amount of the electrical storage device 17, the charged power amount charged to the electrical storage device 17 in the charging zone CS, and the power consumption amounts in the speed adjustment zone VAS and the charging zone CS.

Next, for example, the vehicle management system 100 causes the target speed computing section 122 to predict a shortage amount Es of the charged power amount predicted in the previous process P8 relative to a full charge amount of the electrical storage device 17 of the work vehicle 10 as the target. While the full charge amount of the electrical storage device 17 changes due to the deterioration of the secondary battery and the like in some cases, by acquiring the history of the charged power amount of the electrical storage device 17 from the work vehicle 10, the latest full charge amount of the electrical storage device 17 can be estimated.

Next, the vehicle management system 100 executes a process P10 of determining whether or not the waiting time WTv of the following work vehicle 10 as the target is generated and the shortage amount Es relative to the full charge amount of the electrical storage device 17 of the work vehicle 10 as the target at the ending point of the charging zone CS is positive. In the process P10, for example, when it is determined that the waiting time WTv of the work vehicle 10 is generated and the shortage amount Es relative to the full charge amount of the electrical storage device 17 at the ending point of the charging zone CS is positive (YES), the target speed computing section 122 executes a process P11 of lowering the target speed of the work vehicle 10.

In the process P11, for example, the target speed computing section 122 lowers the target speed of the work vehicle 10 in the charging zone CS such that the increased amount $\Delta T$ of the traveling time of the work vehicle 10 in the charging zone CS does not exceed the waiting time WTv of the work vehicle 10 predicted in the process P7. Then, the target speed computing section 122 executes the process P6 of transmitting the lowered target speed to the following work vehicle 10 as the target via the communication device 22. Consequently, the waiting time WTv of the work vehicle 10 as the target can be reduced to increase the charged power amount of the electrical storage device 17 without generating the waiting time WTm of the working machine 30 at the operation spot OS.

Then, the vehicle management system 100 ends the processing flow illustrated in Fig. 9, and repeatedly executes the processing flow at a predetermined cycle. Meanwhile, in the process P10, when the target speed computing section 122 determines that the waiting time WTv of the work vehicle 10 is not generated or the shortage amount Es relative to the full charge amount of the electrical storage device 17 is zero (NO), the vehicle management system 100 ends the processing flow illustrated in Fig. 9, and repeatedly executes the processing flow at a predetermined cycle.

Note that in the processing flow illustrated in Fig. 9, an example of suppressing the generation of the waiting time WTm of the working machine 30 and the waiting time WTv of the following work vehicle 10 by correcting the target speed of the following work vehicle 10 among the preceding work vehicle 10 and the following work vehicle 10 is described. However, the vehicle management system 100 allows suppressing the generation of the waiting time WTm of the working machine 30 and the waiting time WTv of the following work vehicle 10 by correcting the target speed of the preceding work vehicle 10.

The following describes actions of the vehicle management system 100 of the embodiment.

In the vehicle management system 100 of the embodiment, the planned route PR of the work vehicle 10 includes the operation spot OS at which the work vehicle 10 stops to perform a work. The vehicle control device 110 further includes the power storage control section 116 that transmits the charged power amount of the electrical storage device 17 to the vehicle management device 120. The target speed computing section 122 of the vehicle management device 120 predicts the time interval TI from when the preceding work vehicle 10 arrives at the operation spot OS to when the following work vehicle 10 arrives at the operation spot OS among the two preceding and following traveling work vehicles 10. Furthermore, the target speed computing section 122 corrects the target speed of the following work vehicle 10 based on the time interval TI and the charged power amount received from the vehicle control device 110 of the following work vehicle 10.

With this configuration, according to the vehicle management system 100 of the embodiment, the target speed computing section 122 can predict the generation of the delay time that is a time period from when the preceding work vehicle 10 leaves the operation spot OS to when the following work vehicle 10 arrives based on the time interval TI. The target speed computing section 122 can predict the generation of the waiting time WTv of the following work vehicle 10 due to the arrival of the following work vehicle 10 at the operation spot OS before the departure of the preceding work vehicle 10 from the operation spot OS based on the time interval TI. When the generation of the delay time is predicted, the target speed computing section 122 can increase the speed of the following work vehicle 10 in a range of not causing the running out of power in the work vehicle 10. This allows suppressing the generation of the delay time of the working machine 30 to improve the productivity of the work site WS. When the generation of the waiting time WTv is predicted, the target speed computing section 122 can lower the target speed of the following work vehicle 10 in the charging zone CS before the operation spot OS to increase the charged power amount of the electrical storage device 17.

In the vehicle management system 100 of the embodiment, the planned route PR of the work vehicle 10 includes the operation spot OS at which the work vehicle 10 stops to perform a work. Then, in a case where the generation of the delay time of the following work vehicle 10 is predicted, for example, when the waiting time WTm of the working machine 30 is generated at the operation spot OS, the target speed computing section 122 of the vehicle management device 120 corrects the target speed of the work vehicle 10. That is, among the two preceding and following traveling work vehicles 10, when the generation of the delay time after the end of the work at the operation spot OS by the preceding work vehicle 10 to the arrival of the following work vehicle 10 at the operation spot OS is predicted, the target speed computing section 122 corrects the target speed of the preceding work vehicle 10 or the following work vehicle 10 to reduce the delay time.

With this configuration, according to the vehicle management system 100 of the embodiment, the running out of power in the work vehicle 10 can be avoided in the entire planned route PR on which the work vehicle 10 travels, and the generation of the waiting time WTv and the delay time of the work vehicle 10 can be suppressed to suppress the reduction in work efficiency. The waiting time WTv of the work vehicle 10 at the operation spot OS may be generated not only at the loading spot OS1 but also at the accumulation spot OS2 at which the work vehicles 10 perform unloading one by one. Similarly, the delay time of the work vehicle 10 at the operation spot OS may be generated not only at the loading spot OS1 but also at the accumulation spot OS2 at which the work vehicle 10 performs unloading to a crushing machine as a waiting time of the crushing machine.

In the vehicle management system 100 of the embodiment, the planned route PR of the work vehicle 10 includes the operation spot OS at which the work vehicle 10 stops to perform a work. Then, when the generation of the waiting time WTv in which the preceding work vehicle 10 among the two preceding and following traveling work vehicles 10 stops at the operation spot OS and the following work vehicle 10 waits before the operation spot OS is predicted, the target speed computing section 122 of the vehicle management device 120 corrects the target speed of the preceding work vehicle 10 or the following work vehicle 10 to reduce the waiting time WTv.

With this configuration, according to the vehicle management system 100 of the embodiment, the speed of the preceding work vehicle 10 can be increased before the operation spot OS in a range of not causing the running out of power in the work vehicle 10. This allows suppressing the generation of the waiting time WTv of the following work vehicle 10 to improve the productivity of the work site WS. Further, the target speed of the following work vehicle 10 in the charging zone CS before the operation spot OS can be lowered to suppress the generation of the waiting time WTv of the work vehicle 10, and the charged power amount of the electrical storage device 17 of the work vehicle 10 can be increased.

As described above, the embodiment can provide the vehicle management system 100 capable of avoiding the running out of power in the work vehicle 10 in the entire planned route PR on which the work vehicle 10 travels, and suppressing the reduction in operation efficiency.

While the embodiments of the vehicle control device and the vehicle management system according to the disclosure are described above in detail using the drawings, specific configurations are not limited to the embodiments, and design changes and the like within a scope not departing from the gist of the disclosure are included in the disclosure.

Reference Signs List

| | |
|---|---|
| 10 | Work vehicle |
| 12 | Position sensor |
| 13 | Speed sensor |
| 16 | Power receiving device |
| 17 | Electrical storage device |
| 18 | Travel device |
| 40 | Power feeding device |
| 100 | Vehicle management system |
| 110 | Vehicle control device |
| 111 | Zone information acquiring section |
| 112 | Travel control section |
| 113 | Target speed computing section |
| 114 | Zone determining section |
| 116 | Power storage control section |
| 120 | Vehicle management device |
| 121 | Zone information transmitting section |
| 122 | Target speed computing section |
| 124 | Power consumption calculating section |
| cr | Charging speed |
| CS | Charging zone |
| LES | Low power consumption zone |
| LSS | Low speed zone |
| NCS | Non-charging zone |
| OS | Operation spot |
| PR | Planned route |
| SI | Zone information |

# EP 4 685 005 A1

**Claims**

1. A vehicle control device mounted in a work vehicle including a power receiving device that receives supply of power from an external power feeding device, an electrical storage device charged with the power supplied from the power receiving device, and a travel device that generates a driving force with power supplied from the electrical storage device or the power receiving device, the vehicle control device comprising:

   a zone information acquiring section that acquires zone information on a zone included in a planned route of the work vehicle, the zone information including information on one or more charging zones in which the power feeding device is installed and the work vehicle travels while the electrical storage device is charged and information on one or more non-charging zones in which the power feeding device is not installed and the work vehicle travels while the power of the electrical storage device is supplied to the travel device to consume the power of the electrical storage device; and
   a travel control section that controls the travel device such that a charged power amount of the electrical storage device at an ending point of the charging zone becomes larger than a power consumption amount of the travel device consumed in the non-charging zone having the ending point as a starting point.

2. The vehicle control device according to claim 1, further comprising:

   a target speed computing section that calculates target speeds of the work vehicle in the charging zone and the non-charging zone such that the charged power amount becomes larger than the power consumption amount based on the zone information acquired from the zone information acquiring section; and
   a zone determining section that determines whether a zone in which the work vehicle is traveling is one of the one or more charging zones or the one or more non-charging zones, based on position information of the work vehicle input from a position sensor mounted in the work vehicle and the zone information input from the zone information acquiring section,
   wherein the travel control section acquires a speed of the work vehicle from a speed sensor mounted in the work vehicle, and controls the travel device to cause the work vehicle to travel at the target speed corresponding to the charging zone or the non-charging zone determined by the zone determining section among the target speeds calculated by the target speed computing section.

3. The vehicle control device according to claim 2,
   wherein the target speed computing section calculates the target speed at which a traveling time of the work vehicle traveling on the planned route becomes shortest.

4. The vehicle control device according to claim 2,
   wherein the target speed computing section calculates the target speed in the charging zone based on a charging speed from the power feeding device to the electrical storage device in the charging zone.

5. The vehicle control device according to claim 2,
   wherein the travel control section limits an upper limit of the speed of the work vehicle in the charging zone to the target speed in the charging zone.

6. A vehicle management system comprising:

   the vehicle control device according to claim 1 mounted in each of a plurality of the work vehicles; and
   a vehicle management device installed outside the plurality of work vehicles and configured to communicate with a plurality of the vehicle control devices,
   wherein the vehicle management device includes a zone information transmitting section that transmits the zone information to the vehicle control device, and a target speed computing section that calculates target speeds of the work vehicle in the charging zone and the non-charging zone such that the charged power amount becomes larger than the power consumption amount based on the zone information and transmits the target speeds to the vehicle control device,
   wherein the vehicle control device further includes a zone determining section that determines whether a zone in which the work vehicle is traveling is one of the one or more charging zones or the one or more non-charging zones, based on position information of the work vehicle input from a position sensor mounted in the work vehicle and the zone information acquired by the zone information acquiring section, and
   wherein the travel control section of the vehicle control device acquires a speed of the work vehicle from a speed sensor mounted in the work vehicle, and controls the travel device to cause the work vehicle to travel at the target speed corresponding to the charging zone or the non-charging zone determined by the zone determining section among the target speeds received from the vehicle management device.

7. The vehicle management system according to claim 6,

   wherein the vehicle control device further includes a power storage control section that transmits the charged power amount of the electrical storage device to the vehicle management device, and
   wherein the vehicle management device further includes a power consumption calculating section that calculates the power consumption amount of the work vehicle in the non-charging zone based on the charged power amount received from the vehicle control device when the work vehicle passes through a starting point and an ending point of the non-charging zone.

8. The vehicle management system according to claim 6, further comprising
   the power feeding device installed in a low speed zone in which the speed of each of the work vehicles becomes lower than an average speed of the plurality of work vehicles traveling on the planned route or a low power consumption zone in which the power consumption amount of each of the work vehicles becomes smaller than an average power consumption amount of the plurality of work vehicles traveling on the planned route.

9. The vehicle management system according to claim 6,

   wherein the planned route includes an operation spot at which the work vehicle stops to perform a work,
   wherein the vehicle control device further includes a power storage control section that transmits the charged power amount of the electrical storage device to the vehicle management device, and
   wherein the target speed computing section of the vehicle management device predicts a time interval from when a preceding work vehicle among the two preceding and following traveling work vehicles arrives at the operation spot to when the following work vehicle arrives at the operation spot, and corrects the target speed of the following work vehicle based on the time interval and the charged power amount received from the vehicle control device of the following work vehicle.

10. The vehicle management system according to claim 6,

    wherein the planned route includes an operation spot at which the work vehicle stops to perform a work, and
    wherein when a generation of a delay time from when a preceding work vehicle among the two preceding and following traveling work vehicles ends the work at the operation spot to when the following work vehicle arrives at the operation spot is predicted, the target speed computing section of the vehicle management device corrects the target speed of the preceding work vehicle or the following work vehicle to decrease the delay time.

11. The vehicle management system according to claim 6,

    wherein the planned route includes an operation spot at which the work vehicle stops to perform a work, and
    wherein when a generation of a waiting time in which a preceding work vehicle among the two preceding and following traveling work vehicles stops at the operation spot and the following work vehicle waits before the operation spot is predicted, the target speed computing section of the vehicle management device corrects the target speed of the preceding work vehicle or the following work vehicle to decrease the waiting time.

# Fig. 1

# Fig. 2

# Fig. 3

EP 4 685 005 A1

# Fig. 4

```
        ┌─────────┐
        │  Start  │
        └────┬────┘
             │
             ▼
 ┌───────────────────────────┐
 │  Acquire zone information  │──P1
 └───────────┬───────────────┘
             │
             ▼
 ┌─┬─────────────────────┬─┐
 │ │  Control travel device │ │──P2
 └─┴─────────┬───────────┴─┘
             │
             ▼
        ┌─────────┐
        │   End   │
        └─────────┘
```

# Fig. 5

<u>P2</u>

```
      ┌─────────┐
      │  Start  │
      └────┬────┘
           │
           ▼
  ┌──║─────────────────────║──┐
  │  ║  Calculate target speed  ║  │─── P21
  └──║─────────────────────║──┘
           │
           ▼
  ┌───────────────────────────┐
  │  Determine zone in traveling  │─── P22
  └───────────────────────────┘
           │
           ▼
  ┌───────────────────────────┐
  │    Determine target speed    │─── P23
  └───────────────────────────┘
           │
           ▼
  ┌───────────────────────────┐
  │     Control travel device     │─── P24
  └───────────────────────────┘
           │
           ▼
      ┌─────────┐
      │   End   │
      └─────────┘
```

# Fig. 6

P21

```
        ( Start )
            │
            ▼
┌────────────────────────────┐
│ Calculate power consumption │──── P211
│     amount in each zone     │
└────────────────────────────┘
            │
            ▼
┌────────────────────────────┐
│ Calculate required charging │──── P212
│    time in charging zone    │
└────────────────────────────┘
            │
            ▼
┌────────────────────────────┐
│    Calculate target speed   │──── P213
│       in charging zone      │
└────────────────────────────┘
            │
            ▼
        ( End )
```

# Fig. 7

23 — HMI

22 — Communication Device

21

120

123 — Map Information Updating Section

121 — Zone Information Transmitting Section

122 — Target Speed Computing Section

124 — Power Consumption Calculating Section

140 — Storage Device

# Fig. 8

## Fig. 9

# Fig. 10

## INTERNATIONAL SEARCH REPORT

| International application No. |
| --- |
| **PCT/JP2024/008292** |

**A.   CLASSIFICATION OF SUBJECT MATTER**

*B60L 50/53*(2019.01)i; *H02J 7/00*(2006.01)i; *H02J 7/04*(2006.01)i
FI:   B60L50/53; H02J7/00 P; H02J7/04 A

According to International Patent Classification (IPC) or to both national classification and IPC

**B.   FIELDS SEARCHED**

Minimum documentation searched (classification system followed by classification symbols)

B60L50/53; H02J7/00; H02J7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y | JP 2017-189062 A (HITACHI, LTD.) 12 October 2017 (2017-10-12) abstract, paragraphs [0019]-[0061], fig. 1-9 | 1 |
| A | | 2-11 |
| Y | JP 2020-205740 A (DENSO CORPORATION) 24 December 2020 (2020-12-24) paragraphs [0033], [0073]-[0075], fig. 1, 2, 6 | 1 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | Publication date (day/month/year) |
|---|---|---|---|---|---|
| JP | 2017-189062 | A | 12 October 2017 | (Family: none) | |
| JP | 2020-205740 | A | 24 December 2020 | US 2020/0398682 A1 paragraphs [0035], [0082]-[0084], fig. 1, 2, 6 | |

Form PCT/ISA/210 (patent family annex) (July 2022)

**EP 4 685 005 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019068500 A